# EUROPEAN PATENT APPLICATION

(11) **EP 1 222 989 A2**
(43) Date of publication of application: **17.07.2002**
(21) Application number: 01310639.8
(22) Date of filing: 19.12.2001
(51) Int. Cl.: B23K 9/028

(54) **Method for large pressure vessel assembly**

(30) Priority: 26.12.2000 US 745840
(71) Applicant: GENERAL ELECTRIC COMPANY, Schenectady, NY 12345 (US)
(72) Inventor: Offer, Henry Peter, Los Gatos, California 95030 (US); Sandusky, David Wesley, Los Gatos, California 95030 (US)
(74) Representative: Pedder, James Cuthbert

(57) **Abstract**

Method for fabricating a vessel, comprising the steps of arranging at least two components (14,16,18,20) of the vessel in a generally vertical disposition and welding the components together essentially simultaneously. The method is particularly suitable for fabrication on site of large pressure vessels used in nuclear reactors.

## Description

The present invention relates generally to assembly of reactor pressure. More specifically, the invention provides a method for assembling a pressure vessel in which all of the vessel sections are stacked vertically and welded essentially simultaneously.

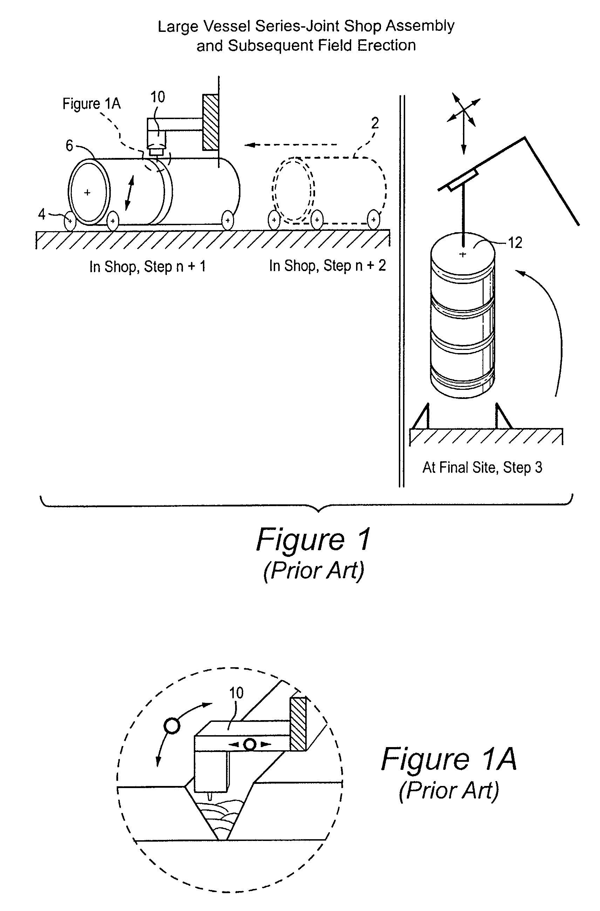

Fabrication of large pressure vessels, including nuclear reactor pressure vessels, is a very time-consuming and expensive process. In most cases, fabrication of the pressure vessel paces the entire plant construction project. Typically, pressure vessels are manufactured one piece at a time with the axis of the vessel horizontal to the floor, and the vessel segments are rotated below a fixed welding head (Figure 1).

In order to be competitive in the electric power generation business, it is necessary to construct a power plant on a schedule comparable to competing forms of energy generation. Currently, nuclear reactors have a clear disadvantage to equivalent size fossil-fired generating plants because of the significantly longer time taken to complete the construction of the reactor pressure vessel, especially the welding assembly.

Presently, using conventional assembly methods, only small or incremental improvements in fabrication schedule are possible. A further difficulty is that, in some cases, the siting of a plant precludes shipment of a complete pressure vessel because of its large size. To significantly improve the pressure vessel fabrication schedule, a radical change in the assembly method and welding process is required.

A need exists for an improved method for fabricating pressure vessels. The present invention seeks to fill that need.

It has been discovered according to the present invention that it is possible to significantly reduce the overall time required to both assemble and weld join the segments of a large pressure vessel, such as used for a light water nuclear reactor. This is accomplished by abandoning conventional practices and assembly sequences and, instead, performing the assembly of the vessel in one location, usually the final site location, with the axis of the vessel in the final position, which is usually vertical.

The present invention provides a method for fabricating a vessel, comprising the steps of:arranging at least two components of the vessel in a generally vertical disposition, and welding the components together essentially simultaneously. Typically, the method is used for fabrication of large pressure vessels such as those used in nuclear reactors.

The method of the invention allows many operations to progress in parallel using gas-shielded narrow groove weld processes. Use of relatively low heat input gas shielded processes additionally allows elimination of multiple intermediate stress relief operations which also consume significant amounts of time in conventional practice. Welding process time is further reduced if there is used a single-pass-per-layer technique, such as that described in the U.S. patent 5,670,072 (the disclosure of which is hereby incorporated by reference), referred to herein occasionally as FineLine™ Welding.

The invention will now be described in greater detail, by way of example, with reference to the drawings, in which:-
Figure 1 is a schematic illustration of the prior approach for fabrication of pressure vessels; and
Figure 2 is a schematic illustration of the fabrication method of the present invention.

Referring to Figure 1, there is shown schematically a conventional approach to fabricatrion of large pressure vessels, employing what is referred to as a "series-joint shop" assembly approach. In this method, a vessel component 2, typically cylindrical in shape, is mounted on a trolley assembly 4 with the longitudinal axis of the component essentially horizontal and parallel with the floor. A second component 6 is brought into contiguous relationship with the first component 2 at region 8, and the two components are welded together by rotation of the components below a conventional fixed welding head 10, using a manual shielded metal arc process or other slow process. This is shown in more detail in Detail A of Figure 1. Further vessel components are brought into contact with each other sequentially, and welded into place. The completed vessel 12 is then erected on site, as shown in Figure 1.

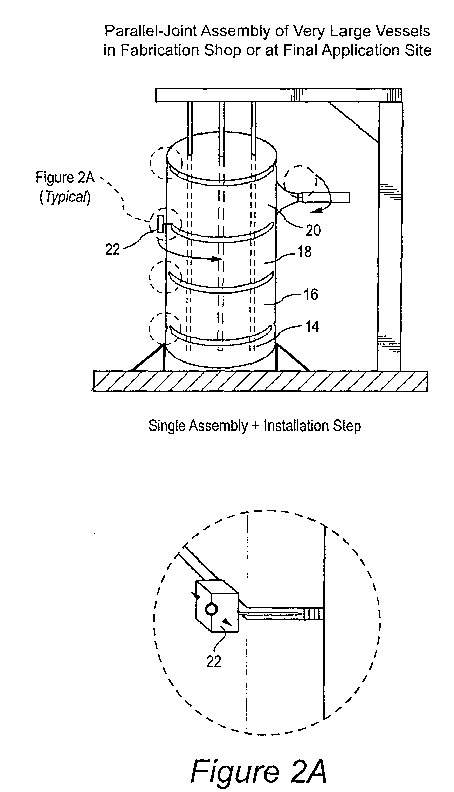

Figure 2 illustrates the method of the present invention. Vessel components 14, 16, 18, 20 are stacked vertically as shown in Figure 2, either on site or in the fabrication shop, such that the components are each alligned vertically with respect to each other so that they can be welded together simultaneously. According to the method of the present invention, assembly of the vessel components proceeds in parallel rather than sequentially. Thus, the components are welded in the vertical configuration essentially simultaneously, i.e. they are welded using one or more welding heads such that the generation of a weld joining one pair of of components occurs within 50 seconds to 3 minutes, more usually about 1 minute, of generation of a weld joining another pair of components. This allows many operations to progress in parallel using high reliability welding techniques that can be performed in all positions including vertical, horizontal, and overhead. Various versions of narrow groove gas tungsten arc welding may fulfill this need, such as gas-shielded narrow groove weld processes. The optimum weld process for this application is a high deposition-rate version rate of FineLine™ welding referred to above. Typically, an orbital welding arrangement 22 is employed.

The individual pieces are stacked up vertically with appropriate restraints. Generally, the method of the invention employs a hydrostatic test pit to provide secure support and alignment of the individual sections. As an alternative, if transportation facilities do not allow shipment of a complete vessel to the construction site, at this point the individual pieces may be shipped to the construction site and the stack-up of parts carried out on the vessel pedestal or on a temporary support.

Preliminary phases of pressure vessel construction may proceed in accordance with conventional practice. According to one embodiment of the invention, the vessel segments are fixed in place and then joined utilizing an orbital welding head. Thus, individual shell sections are rolled and welded from plates or forged and machined as ring forgings. Likewise, flange rings are forged and machined, and the bottom dome formed. All of these individual pieces may have preliminary operations performed, such as application of corrosion resistant cladding, if required. Welding nozzles in this phase of the fabrication sequence is optional. As each piece is finished, narrow groove weld joint preparations are applied with the preferred embodiment applying FineLine™ Welding preparations.

Once stack-up of the pieces is completed, welding using the FineLine™ Welding process on as many joints as practical proceeds in parallel. Multiple welding heads may be mounted on a single joint and operated alternately or in parallel. Since welding position is not critical to the welding process being applied and the pieces remain stationary, this may include attachment of the bottom dome and installation of nozzle forgings.

Since the welding process used is shielded with dry inert gas(es), typically argon, and the narrow joint produces the benefits of reduced residual stresses, intermediate stress relief processes used in conventional practice may be deleted, providing further significant savings in construction time. Back-cladding of the major welds may be carried out while the vessel is set in the vertical position or, if logistics permit, after the vessel is moved into a horizontal position. Final post weld heat treatment may be performed in place or in a furnace. Alternately, individual welds or sections may be heat treated locally.

The FineLine™ Welding practice noted above has been developed and applied in the field to several piping system designs. Further development of the process has demonstrated that thick weld joints typical of reactor vessel construction can be performed practically and economically using a high deposition-rate version of this welding process. For the weld joint design and the welding process, the greatest productivity benefit results from the combination of a very high-aspect ratio joint and a single weld pass per layer (without lateral weld torch oscillation).

The method of the invention constiutes a radical change in the approach and sequence of reactor pressure vessel assembly. The primary use of the invention is in the construction of large nuclear reactor pressure vessels. Competitive construction schedules are critical to the nuclear power business. This technique may also be applied to construction of large chemical vessels, especially field-erected vessels.

The fabrication method of the invention allows significant reductions in time needed to assemble a vessel of a given size and wall thickness. Review of the shop fabrication schedule and sequence of a typical large reactor pressure vessel shows that parallel processing embodied by this invention potentially can eliminate 6 months to one year from a three year fabrication schedule. This constitutes a significant advantage. It also permits efficient site assembly of components for a vessel that would in some cases be too large to transport to the plant site as a single, pre-assembled unit.

## Claims

1. A method for fabricating a vessel, comprising the steps of:
arranging at least two components (14,16,18,20) of said vessel in a generally vertical disposition; and
welding said components together essentially simultaneously.

2. A method according to claim 1, wherein said components (14,16,18,20) are cylindrical.

3. A method according to claim 1, wherein the welding is gas-shielded narrow groove welding (22).

4. A method according to claim 1, wherein the components are assembled in a hydrostatic test pit.

5. A method according to claim 1, wherein said components are for use in a nuclear reactor.

6. A method according to claim 1, wherein multiple welding heads are mounted on a single joint and operated alternately.

7. A method according to claim 1, wherein multiple welding heads are mounted on a single joint and operated in parallel.

8. A method for fabricating a pressure vessel for a nuclear reactor, comprising the steps of:
arranging a plurality of components (14,16,18,20) of said pressure vessel in a generally vertical disposition such that each of the components are alligned vertically with respect to each other; and
welding said components together essentially simultaneously.
